(19) Europäisches Patentamt
European Patent Office
Office européen des brevets

(11) Publication number: 0 038 700 B1

(12) # EUROPEAN PATENT SPECIFICATION

(45) Date of publication of patent specification: 02.11.83

(51) Int. Cl.³: C 01 B 15/029

(21) Application number: 81301739.9

(22) Date of filing: 21.04.81

(54) ## Method of manufacturing hydrogen peroxide

(30) Priority: 22.04.80 GB 8013165

(43) Date of publication of application:
28.10.81 Bulletin 81/43

(45) Publication of the grant of the patent:
02.11.83 Bulletin 83/44

(84) Designated Contracting States:
BE DE FR IT NL SE

(56) References cited:
US - A - 4 007 256
US - A - 4 128 627

(73) Proprietor: AIR PRODUCTS AND CHEMICALS, INC.
P.O. Box 538
Allentown, Pennsylvania 18105 (US)

(72) Inventor: Dyer, Paul Nigel
52 Pleasant Road
Allentown Pennsylvania 18103 (US)
Inventor: Moseley, Fred
30 Somerville Road
Cobham Surrey (GB)

(74) Representative: Lucas, Brian Ronald
Lucas, George & Co. 135 Westhall Road
Warlingham Surrey CR3 9HJ (GB)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

EP 0 038 700 B1

Courier Press, Leamington Spa, England.

# Method of manufacturing hydrogen peroxide

This invention relates to a method of manufacturing hydrogen peroxide from its constituent elements, hydrogen and oxygen.

In our US Patent Specification No. 4,128,627 we have described a process for producing hydrogen peroxide wherein a gaseous mixture comprising hydrogen and oxygen is contacted with a catalyst in the presence of water and an organic solvent wherein:

i) the organic solvent is immiscible with water and unreactive with hydrogen peroxide under the contacting conditions;

ii) the distribution coefficient for hydrogen peroxide between the water and the organic solvent is greater than 1;

iii) the catalyst is of the formula $L_2MX_2$ wherein L is a ligand represented by the formula A $R_1$ $R_2$ $R_3$ wherein $R_1$ $R_2$ and $R_3$ are alkyl, cycloalkyl or aryl groups, hydrogen or halogen, A is a Group 5b element selected from the group consisting of nitrogen, phosphorous and arsenic, M is a Group 8 metal and X is halogen, said catalyst being soluble in said organic solvent and insoluble in water; and

iv) the gaseous mixture is non-ignitable under the process conditions.

In the description of this patent specification we suggest that suitable organic solvents could comprise 1,2-dichlorobenzene, chlorobenzene and xylene.

We have now discovered that substantial and unexpected advantages are obtained when the organic solvent is selected from the group consisting of fluorocarbons, halofluorocarbons and mixtures thereof. In particular, in at least preferred embodiments we have observed (compared with our previous work):

1) high catalyst activity at low concentrations of catalyst in the organic solvent;

2) a high rate of production of hydrogen peroxide in the aqueous phase per unit partial pressure of oxygen and per unit concentration of catalyst; and

3) the production of high concentrations of hydrogen peroxide in the aqueous phase.

The fluorocarbon and/or halofluorocarbon is preferably aliphatic and should preferably be fully substituted by halogens with at least 25% of the halogen atoms, and possibly all of the halogen atoms, being fluorine. Examples of suitable perfluorocarbons include perfluoroaliphatic ethers, perfluoroalkyl tertiary amines, perfluoropentane, perfluoro-1,3-dimethylcyclohexane and mixtures thereof. Examples of suitable halofluorocarbons include 1,1,2-trichlorotrifluoroethane, 1,2-dichlorotetrafluoroethane, 1,2-dibromotetrafluoroethane and mixtures thereof.

The phase volume ratio of water to halofluorocarbon or perfluorocarbon is preferably in the range 10:1 to 1:10, the range 2:1 to 1:3 being more preferred.

As indicated in US Patent Specification No. 4,128,627:

1) The ligand L is preferably selected from the group consisting of tri(pentafluorophenyl) phosphine, tricyclohexylphosphine and triphenylarsine.

2) The Group 8 metal is preferably palladium.

3) The halogen is preferably chlorine.

4) The catalyst is preferably selected from the group consisting of bis(tri(pentafluorophenyl)-phosphine) palladium dichloride, bis(tricyclohexylphosphine) palladium dichloride and bis(triphenylarsine) palladium dichloride.

5) The gaseous mixture can comprise oxygen, hydrogen and a gas which is inert under the reaction conditions, for example nitrogen and/or methane.

6) The gaseous mixture may consist of oxygen and hydrogen wherein the ratio of oxygen to hydrogen does not exceed 4 parts oxygen per 100 parts hydrogen (by volume).

Overall we recommend the use of the complex Pd $Cl_2$ $(P(C_6F_5)_3)_2$ as catalyst in combination with a halofluorocarbon as organic solvent. In this embodiment we have found that the rate of hydrogen peroxide production is relatively independent of catalyst concentration in the organic phase down to $5 \times 10^{-5}$M. Industrially useful rates of production may be achieved using catalyst concentrations between $5 \times 10^{-5}$M and $2.5 \times 10^{-4}$M, a factor of up to 100 less than is necessary when using previously recommended solvents, leading to a considerable reduction in capital cost. The catalyst activity factor expressed in weight% $H_2O_2$/hour/MPa $O_2$/$10^{-1}$M catalyst is increased to 1.5—5.8 compared with 0.03—0.15 using the previously recommended solvents. In addition there is a reduced tendency for the rate of hydrogen peroxide production to decrease with increasing hydrogen peroxide concentration in the aqueous phase thereby enabling higher hydrogen peroxide concentrations, for example 4.7 wt.% to be achieved whilst regularly sampling and making up the aqueous phase with deionised water.

When a halofluorocarbon is used as organic solvent the addition of 1—50,000 ppm (parts per million) by volume of perfluorocarbon, for example perfluoro-1,3-dimethylcyclohexane or polymeric halofluorocarbon of molecular weight greater than 300 g, for example polychlorotrifluoroethylene (Kel F oil), or up to 50 ppm (by weight) of a $C_{10}$—$C_{30}$ straight chain hydrocarbon, hydrocarbon salt, carboxylic acid, ester of a carboxylic acid or salt of a carboxylic acid or a fluorinated equivalent thereof, for example n-eicosane, stearic acid and potassium perfluorooctane sulphonate, facilitates maintaining high rates of hydrogen peroxide synthesis which are linear over extended periods. The additives must, of course, be resistant to reaction with hydrogen peroxide under the conditions of the process and may be used in combination if desired.

The aqueous and organic phases should be brought into intimate contact over a large contact area to facilitate extraction of the hydrogen peroxide into the aqueous phase as it is formed. Such contact can conveniently be achieved by a mechanical stirrer or, preferably, by sparging a gaseous mixture containing hydrogen and oxygen through the liquid.

The process is advantageously operated at superatmospheric pressure, for example 0—35 MPa and preferably at temperatures between the freezing point of the aqueous phase and 15°C, and generally between 0 and 10°C, and generally between 0 and 10°C.

Without wishing to be bound by theory, it appears that in the present invention, hydrogen peroxide is synthesized at a surface active film at the interface between the organic and aqueous phases. The surface active film is formed in situ from the catalytic complex solution in the organic phase when mixed with water and contacted with the gas mixture containing hydrogen and oxygen. This leads to better utilization of low concentrations of the catalytic complex and high catalytic acitivity.

## Examples

The following examples illustrate embodiments of the present invention and embodiments of the invention disclosed in our US Patent Specification No. 4,128,627. The experimental procedure was as follows.

A cylindrical reactor was constructed of pyrex glass and equipped with a perforated Teflon (R.T.M.) disc gas distributor, pyrex reflux condenser, pyrex enclosed thermocouple and pyrex inlet and outlet lines. Into this reactor was loaded 180 ml. of a solution of known concentration of the catalytic complex $Pd\,Cl_2\,(P(C_6F_5)_3)_2$ in the test organic solvent together with 90 ml. deionised water, and the temperature of the reactor contents was maintained between 1 and 10°C by external refrigeration.

The following solvents were obtained from BDH Chemicals Ltd., Poole, England: 1,1,2-trichlorotrifluoroethane, and Analar grade 1,2-dichlorobenzene, benzene and xylene. For the tests of the effects of additions (Examples 22—26), the 1,1,2-trichlorotrifluoroethane was distilled before use. The perfluoro-1,3-dimethylcyclohexane was obtained from Fluorochem Ltd., Glossop, England.

A non-flammable gas mixture containing, in Examples 8, 9, 10 and 21: 3.5% $O_2$, 48.3% $H_2$, 48.2% $N_2$ and in the remaining Examples: 2.5 to 3.5% $O_2$ in $H_2$, was sparged through the reactor at a specified flow rate using a recirculating gas pump. Both inlet pressure and inlet oxygen concentration in the gas mixture were maintained automatically.

The hydrogen peroxide concentration in the aqueous phase was measured periodically during the course of each run by temporarily stopping the gas flow for 30 seconds, which allowed the liquid phases to separate, withdrawing a measured volume of the aqueous phase and pumping back into the reactor via a stainless steel diaphragm pump an equal volume of deionised water. The aqueous phase sample was then analysed for hydrogen peroxide by titration with ceric sulphate solution. The aqueous phase samples obtained in this manner were free of catalyst and entrained organic phases.

Selectivity was determined either by liquid mass balance in the reactor or by the decline of oxygen concentration in the recirculated gas mixture with the oxygen supply turned off.

Referring to the drawings:

Examples 1—5 (Fig. 1) illustrate embodiments of the present invention at 12.4 MPa total pressure using 1,1,2-trichlorotrifluoroethane. As the concentration of $Pd\,Cl_2\,(P(C_6F_5)_3)_2$ is decreased from $6.8 \times 10^{-3}$M to $9.1 \times 10^{-5}$M, the maximum rate of hydrogen peroxide production and the specific rate/MPa $O_2$ vary by factors of only 1.8 and 2.4. High catalyst activity factors of 2.40 and 1.29 (units in wt.%/h/MPa $O_2$/$10^{-4}$M catalyst) are achieved in examples 1 and 2. The linearity of example 2 together with its high maximum rate of 1.36 wt%/h enabled 4.7 wt% hydrogen peroxide to be produced in 5 hours, even when the aqueous phase was sampled and diluted during the course of the run.

Examples 6—10 (Fig. 2) illustrate embodiments of the present invention using 1,1,2-trichlorotrifluoroethane at 6.2 and 4.1 MPa, and catalyst concentrations over the range $4.56 \times 10^{-4}$M to $7.4 \times 10^{-5}$M. Again the results show high catalyst utilisation factors in the range of 0.73 to 4.9, and aqueous phase hydrogen peroxide concentrations up to 2 wt% obtainable in 5 hours with sampling and dilution. It will also be apparent from examples 1—10 that the specific maximum rate expressed in wt%/h/MPa $O_2$ obtained is nearly constant, varying only by a factor of 2.7 over the range of operating pressures and catalyst concentrations illustrated. Selectivities were in the range 70—80 mole%.

Examples 11—14 (Fig. 3) and 15—17 (Fig. 4) illustrate the results obtained under identical conditions using the method of US Patent Specification No. 4,128,627 at 7.6 and 12.4 MPa respectively, with 1,2-dichlorobenzene as the organic solvent. They show that higher catalyst concentrations are needed to obtain results comparable with the other examples, i.e. at least 3—5 $\times 10^{-3}$M to obtain similar rates and specific rates. This is also illustrated by the lower catalyst activity factors. Only at catalyst concentrations of the order of $6 \times 10^{-3}$M do the catalyst activity factors of the present invention fall to the same range.

In addition, the rate of hydrogen peroxide production using 1,2-dichlorobenzene as solvent falls more rapidly with increasing hydrogen peroxide concentration greater than 1.5 wt%, so that the maximum obtained in these Examples was only 1.8 wt%.

Examples 18—19 (Fig. 4) show that the results obtained with two other solvents of the type specified in US Patent Specification No. 4,128,627, benzene and xylene, are no better.

The following table compares examples with similar catalyst concentrations and pressures using 1,1,2-trichlorotrifluoroethane and 1,2-dichlorobenzene, and lists the improvement factors obtained by the method of the present invention.

| Compared Example Numbers | Catalyst Concentration Range $10^{-4}$M | Improvement Factors | | | |
|---|---|---|---|---|---|
| | | Ratio of Max. Rate | Ratio of Specific Rate | Ratio of Catalyst Activity | Ratio of $H_2O_2$ Concentration |
| 7 — 11 | 4.6—6.3 | 3.7 | 3.1 | 4.1 | 1.9 |
| 4 — 15 | 18—19 | 4.1 | 4.0 | 4.0 | 1.9 |
| 5 — 16 | 56—68 | 1.2 | 1.4 | 0.8 | 1.5 |

Examples 20—21 (Fig. 5) illustrates embodiments of the present invention with respect to a fluorocarbon, perfluoro-1,3-dimethylcyclohexane, in which the solubility of Pd $Cl_2$ $(P(C_6F_5)_3)_2$ is limited to about 5 x $10^{-5}$M. Although the results are not as good in terms of hydrogen peroxide concentration achieved as with 1,1,2-trichlorotrifluoroethane, the specific maximum rate in wt%/h/MPa $O_2$ and catalyst activity are of similar values.

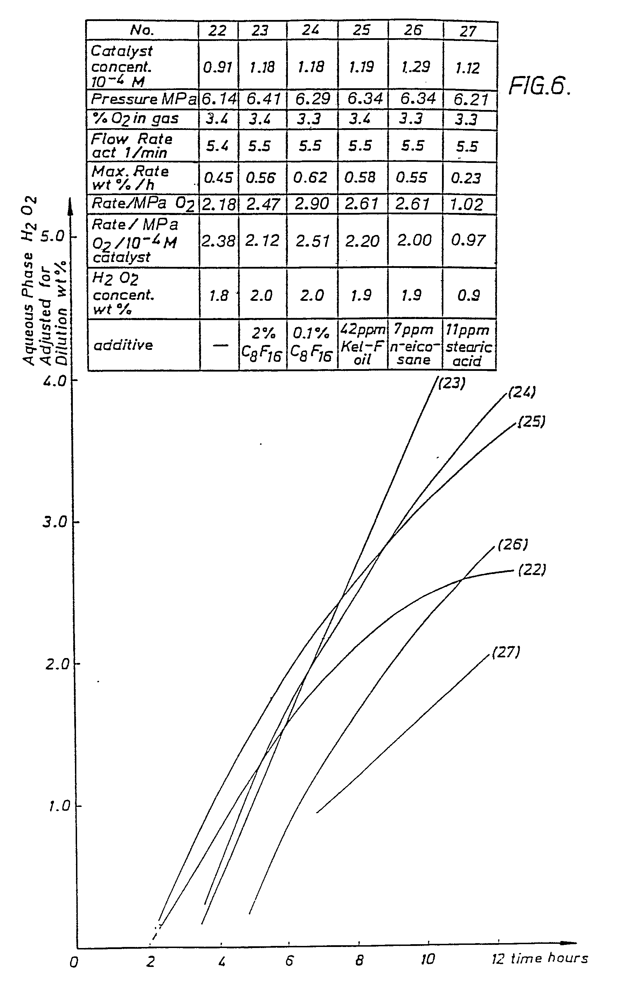

Using 1,1,2-trichlorotrifluoroethane as the halofluorocarbon solvent, Examples 22—26 (Fig. 6) illustrate embodiments of the present invention with respect to the effect certain types of additives have on the linearity of the rate of production of hydrogen peroxide over extended periods. In these examples, sparging was stopped after 6 hours and the reactor contents left quiescent under full gas pressure overnight before restarting sparging 16 hours later. The examples are however plotted as continuous curves that represent the variation in rate of hydrogen peroxide production (adjusted for the dilution following sampling) over the actual time in which gas was sparged through the reactor. The concentration of hydrogen peroxide in the aqueous phase fell during the quiescent period but in the case of the more linear examples 23—27 was reproduced during the subsequent 6 hour sparging period.

It can be seen that excellent results in terms of specific rate/MPa $O_2$, linearity and reproducibility, and catalyst activity are obtained using a halofluorocarbon organic phase and a polymeric halofluorocarbon, or more preferably, a perfluoracarbon, additive.

Whilst a survey of the examples is included in this description, details of each of the examples are included alongside the relevant graphs to assist the reader. In this connection it is noted that the vertical axis are not drawn to the same scale in each graph.

SUMMARY: EXAMPLES 1 to 14

| No. | 1 | 2 | 3 | 4 | 5 | 6 | 7 | 8 | 9 | 10 | 11 | 12 | 13 | 14 |
|---|---|---|---|---|---|---|---|---|---|---|---|---|---|---|
| Catalyst concent. $10^{-4}$M | 0.91 | 2.42 | 6.23 | 18.0 | 68.2 | 1.28 | 1.56 | 0.74 | 1.36 | 1.50 | 6.33 | 13.2 | 28.7 | 47.6 |
| Pressure MPa | 12.3 | 12.4 | 12.4 | 12.3 | 12.3 | 6.14 | 6.83 | 4.14 | 4.14 | 4.14 | 7.65 | 7.86 | 7.45 | 8.14 |
| % $O_2$ in gas | 3.4 | 3.5 | 2.6 | 2.6 | 2.6 | 3.3 | 3.5 | 3.5 | 3.5 | 3.5 | 2.5 | 2.7 | 2.6 | 3.0 |
| Flow Rate act l/min | 5.3 | 5.8 | 5.8 | 5.8 | 5.8 | 5.6 | 5.4 | 5.3 | 5.2 | 5.7 | 11.0 | 10.0 | 10.0 | 11.0 |
| Max. Rate wt. %/h | 0.91 | 1.36 | 1.38 | 1.60 | 1.43 | 0.85 | 0.78 | 0.53 | 0.55 | 0.88 | 0.21 | 0.31 | 0.44 | 0.55 |
| Rate/MPa $O_2$ | 2.18 | 3.19 | 4.21 | 5.22 | 4.50 | 4.06 | 3.19 | 3.63 | 3.77 | 5.95 | 1.02 | 1.45 | 2.03 | 2.18 |
| Rate/MPa $O_2$/ $10^{-1}$M catalyst | 2.40 | 1.29 | 0.68 | 0.29 | 0.08 | 3.13 | 0.71 | 4.79 | 2.73 | 3.97 | 0.17 | 0.10 | 0.07 | 0.04 |
| $H_2O_2$ concent. wt. % | 3.2 | 4.7 | 3.5 | 2.5 | 2.7 | 1.7 | 1.5 | 1.2 | 1.7 | 2.0 | 0.8 | 1.0 | 1.5 | 1.1 |
| Organic Solvent | $CF_2ClCCl_2F$ | | | | | $CF_2ClCCl_2F$ | | | | | 1,2-$C_6H_4Cl_2$ | | | |

SUMMARY: EXAMPLES 15 to 27

| No. | 15 | 16 | 17 | 18 | 19 | 20 | 21 | 22 | 23 | 24 | 25 | 26 | 27 |
|---|---|---|---|---|---|---|---|---|---|---|---|---|---|
| Catalyst concent. $10^{-4}M$ | 19.4 | 56.1 | 89.2 | 62.9 | 63.0 | 0.5 | 0.5 | 0.91 | 1.18 | 1.18 | 1.19 | 1.29 | 1.12 |
| Pressure MPa | 12.34 | 12.41 | 12.34 | 12.48 | 12.41 | 11.72 | 4.14 | 6.14 | 6.41 | 6.21 | 6.34 | 6.34 | 6.27 |
| % $O_2$ in gas | 2.5 | 2.5 | 2.5 | 2.6 | 2.7 | 2.6 | 3.5 | 3.4 | 3.4 | 3.3 | 3.4 | 3.3 | 3.3 |
| Flow Rate act l/min | 5.7 | 6.9 | 8.0 | 6.9 | 6.6 | 6.8 | 5.5 | 5.4 | 5.5 | 5.5 | 5.5 | 5.5 | 5.5 |
| Max. Rate wt. %/h | 0.41 | 1.17 | 0.77 | 0.70 | 0.90 | 0.95 | 0.49 | 0.45 | 0.56 | 0.62 | 0.58 | 0.55 | 0.23 |
| Rate/MPa $O_2$ | 1.31 | 3.77 | 2.47 | 2.18 | 2.61 | 3.05 | 3.34 | 2.18 | 2.47 | 2.90 | 2.61 | 2.61 | 1.02 |
| Rate/MPa $O_2$/ $10^{-4}M$ catalyst | 0.07 | 0.07 | 0.03 | 0.03 | 0.04 | 6.09 | 6.60 | 2.38 | 2.12 | 2.51 | 2.20 | 2.00 | 0.97 |
| $H_2O_2$ concent. wt. % | 1.3 | 1.8 | 1.8 | 1.0 | 1.7 | 1.3 | 0.8 | 1.6 | 2.0 | 2.0 | 1.9 | 1.9 | 0.9 |
| Organic Solvent | 1,2-$C_6H_4Cl_2$ | | | $C_6H_6$ | $C_8H_{10}$ | 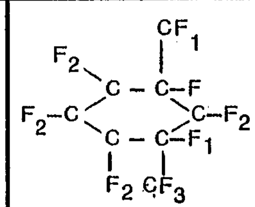 | | $CF_2ClCCl_2F$ | | | | | |
| Additives | | | | | | | | | 2% $C_8F_{16}$ | 0.1% $C_8F_{16}$ | 42ppm Kel-F-oil | 7ppm n-elecosane | 11ppm stearic acid |

**Claims**

1. A process for producing hydrogen peroxide wherein a gaseous mixture comprising hydrogen and oxygen is contacted with a catalyst in the presence of water and an organic solvent wherein:

i) the organic solvent is immiscible with water and unreactive with hydrogen peroxide under the contacting conditions;

ii) the distribution coefficient for hydrogen peroxide between the water and the organic solvent is greater than 1;

iii) the catalyst is of the formula $L_2MX_2$ wherein L is a ligand represented by the formula A $R_1$ $R_2$ $R_3$ wherein $R_1$ $R_2$ and $R_3$ are alkyl, cycloalkyl or aryl groups, hydrogen or halogen, A is a Group 5b element selected from the group consisting of nitrogen, phosphorous and arsenic, M is a Group 8 metal and X is halogen, said catalyst being soluble in said organic solvent and insoluble in water; and

iv) the gaseous mixture is non-ignitable under the process conditions characterized in that the organic solvent is selected from the gorup consisting of fluorocarbons, halofluorocarbons and mixtures thereof.

2. A process according to Claim 1, characterized in that the fluorocarbon and/or halofluorocarbon is aliphatic.

3. A process according to Claim 1 or 2, characterized in that the halofluorocarbon is fully substituted by halogens with at least 25% of the halogen atoms being fluorine.

4. A process according to Claim 3, chracterized in that said halofluorocarbon is selected from the group consisting of 1,1,2-trichlorotrifluoroethane, 1,2-dichlorotetrafluoroethane, 1,2-dibromotetrafluoroethane and mixtures thereof.

5. A process according to Claim 1, 2, 3 or 4, wherein the organic solvent comprises a halofluorocarbon and an additive selected from the group consisting of:

i) 1 to 50,000 ppm (parts per million) by volume perfluorocarbon;

ii) polymeric halofluorocarbon of molecular weight greater than 300 g;

iii) up to 50 ppm by weight of a $C_{10}$—$C_{30}$ straight chain hydrocarbon, hydrocarbon salt, carboxylic acid, ester of a carboxylic acid or salt of a carboxylic acid or a fluorinated equivalent thereof;

and mixtures thereof.

6. A process according to Claim 1 or 2, characterized in that the fluorocarbon is perfluorinated.

7. A process according to Claim 6, characterized in that the fluorocarbon is selected from the group consisting of perfluoroaliphatic ethers, perfluoroalkyl tertiary amines, perfluoropentane, perfluoro-1,3-dimethylcyclohexane and mixtures thereof.

8. A process according to any preceding Claim characterized in that the phase volume ratio of water to halofluorocarbon and/or perfluorocarbon is in the range 10:1 to 1:10.

9. A process according to Claim 8, characterized in that said ratio is in the range 2:1 to 1:3.

10. A process according to any preceding Claim characterized in that the catalyst is selected from the group consisting of bis(tri(pentafluorophenyl)phosphine) palladium dichloride, bis(tricyclohexylphosphine) palladium dichloride and bis(triphenylarsine) palladium dichloride.

**Revendications**

1. Procédé pour la production de peroxyde d'hydrogène dans lequel un mélange gazeux comprenant de l'hydrogène et de l'oxygène est mis en contact avec un catalyseur en présence d'eau et d'un solvant organique où:

i) le solvant organique est non miscible à l'eau et inerte vis-à-vis du peroxyde d'hydrogène dans les conditions de contact;

ii) le coefficient de partage du peroxyde d'hydrogène entre l'eau et le solvant organique est supérieur à 1;

iii) le catalyseur a pour formule $L_2MX_2$ où L est un ligand représenté par la formule $AR_1R_2R_3$ où $R_1$, $R_2$ et $R_3$ sont des groupes alcoyles, cycloalcoyle ou aryle, hydrogène ou halogène, A est un élément du groupe 5b choisi parmi le groupe constitué par l'azote, le phosphore et l'arsenic, M est un métal du groupe 8 et X est un halogène, ledit catalyseur étant soluble dans ledit solvant organique et insoluble dans l'eau; et

iv) le mélange gazeux est ininflammable dans les conditions opératoires, caractérisé en ce que le solvant organique est choisi parmi le groupe constitué par les fluorocarbures, les halogénofluorocarbures et leurs mélanges.

2. Procédé selon la revendication 1, caractérisé en ce que le fluorocarbure et/ou l'halogénofluorocarbure est aliphatique.

3. Procédé selon la revendication 1 ou 2, caractérisé en ce que l'halogénofluorocarbure est entièrement substitué par des halogènes avec au moins 25% des atomes d'halogène étant du fluor.

4. Procédé selon la revendication 3, caractérisé en ce que ledit halogénofluorocarbure est choisi parmi le groupe constitué par le 1,1,2-trichlorotrifluoroéthane, le 1,2-dichlorotétrafluoroéthane, le 1,2-dibromotétrafluoroéthane et leurs mélanges.

5. Procédé selon la revendication 1, 2, 3 ou 4, où le solvant organique comprend un halogénofluorocarbure et un additif choisi parmi le groupe constitué par:

i) 1 à 50 000 ppm (parties par million) en volume de perfluorocarbure;

ii) un halogénofluorocarbure polymère de poids moléculaire supérieur à 300 g;

iii) jusqu'à 50 ppm en poids d'un hydrocarbure à chaîne droite en $C_{10}$—$C_{30}$, d'un sel d'hydrocarbure, d'un acide carboxylique, d'un ester d'acide carboxylique ou d'un sel d'acide carboxylique ou d'un équivalent fluoré correspondant; et leurs mélanges.

6. Procédé selon la revendication 1 ou 2, caractérisé en ce que le fluorocarbure est perfluoré.

7. Procédé selon la revendication 6, caractérisé en ce que le fluorocarbure est choisi parmi le groupe constitué par les éthers perfluoroaliphatiques, les amines perfluoroalcoyliques tertiaires, le perfluoropentane, le perfluoro-1,3-diméthylcyclohexane et leurs mélanges.

8. Procédé selon l'une quelconque des revendications précédentes, caractérisé en ce que le rapport volumétrique de la phase d'eau à la phase d'halogénofluorocarbure et/ou de perfluorocarbure est dans la gamme de 10/1 à 1/10.

9. Procédé selon la revendication 8, caractérisé en ce que ledit rapport est dans la gamme de 2/1 à 1/3.

10. Procédé selon l'une quelconque des revendications précédentes, caractérisé en ce que le catalyseur est choisi parmi le groupe constitué par le bis(tri(pentafluorophényl)phosphine) dichlorure de palladium, le bis(tricyclohexylphosphine) dichlorure de palladium et le bis(triphénylarsine) dichlorure de palladium.

## Patentansprüche

1. Verfahren zur Herstellung von Wasserstoffperoxid, bei dem eine gasförmige Mischung, die Wasserstoff und Sauerstoff enthält, in Gegenwart von Wasser und einem organischen Lösungsmittel mit einem Katalysator in Kontakt gebracht wird, bei dem:

(i) das organische Lösungsmittel mit Wasser nicht mischbar ist und unter den Kontaktbedingungen nicht mit Wasserstoffperoxid reagiert;

(ii) der Verteilungskoeffizient für Wasserstoffperoxid zwischen dem Wasser und dem organischen Lösungsmittel größer als 1 ist;

(iii) der Katalysator ein Katalysator der Formel $L_2MX_2$ ist, in der L ein Ligand ist, der durch die Formel A $R_1$ $R_2$ $R_3$ wiedergegeben wird, in der $R_1$, $R_2$ und $R_3$ Alkyl-, Cycloalkyl- oder Aryl-Reste, Wasserstoff oder Halogen sind, A ein Element der Gruppe 5b ist, das aus einer Gruppe ausgewählt ist, die aus Stickstoff, Phosphor und Arsen besteht, und M ein Metall der Gruppe 8 und X Halogen sind, wobei der genannte Katalysator in dem genannten organischen Lösungsmittel löslich ist und in Wasser unlöslich ist; und

(iv) die gasförmige Mischung unter den Verfahrensbedingungen nicht entflammbar ist, dadurch gekennzeichnet, daß das organische Lösungsmittel aus einer Gruppe ausgewählt ist, die aus Fluorkohlenstoffen, Halogenfluorkohlenstoffen und deren Mischungen besteht.

2. Verfahren nach Anspruch 1, dadurch gekennzeichnet, daß der Fluorkohlenstoff und/oder Halogenfluorkohlenstoff aliphatisch ist.

3. Verfahren nach Anspruch 1 oder 2, dadurch gekennzeichnet, daß der Halogenfluorkohlenstoff vollständig durch Halogen substituiert ist, wobei mindestens 25% der Halogenatome Fluor sind.

4. Verfahren nach Anspruch 3, dadurch gekennzeichnet, daß der genannte Halogenfluorkohlenstoff aus einer Gruppe ausgewählt ist, die aus 1,1,2-Trichlortrifluorethan, 1,2-Dichlortetrafluorethan, 1,2-Dibromtetrafluorethan und deren Mischungen besteht.

5. Verfahren nach Anspruch 1, 2, 3 oder 4, bei dem das organische Lösungsmittel einen Halogenfluorkohlenstoff und einen Zusatz enthält, der aus einer Gruppe ausgewählt ist, die besteht aus:

(i) 1 bis 50 000 Volumen-ppm (Teile pro Million) Perfluorkohlenstoff;

(ii) polymerem Halogenfluorkohlenstoff eines Molekulargewichts größer als 300 g;

(iii) bis zu 50 Gewichts-ppm von $C_{10}$—$C_{30}$ geradkettigen Kohlenwasserstoffen, Kohlenwasserstoffsalzen, Carbonsäuren, Estern von Carbonsäuren, Salzen von Carbonsäuren oder von den fluorierten Äquivalenten davon;

6. Verfahren nach Anspruch 1 oder 2, dadurch gekennzeichnet, daß der Fluorkohlenstoff perfluoriert ist.

7. Verfahren nach Anspruch 6, dadurch gekennzeichnet, daß der Fluorkohlenstoff aus einer Gruppe ausgewählt ist, die aus perfluoraliphatischen Ethern, Perfluoralkyl-tert.-aminen, Perfluorpentan, Perfluor-1,3-dimethylcyclohexan und Mischungen davon besteht.

8. Verfahren nach einem beliebigen der vorangehenden Ansprüche, dadurch gekennzeichnet, daß das Phasen-Volumenverhältnis von Wasser zu Halogenfluorkohlenstoff und/oder Perfluorkohlenstoff im Bereich von 10:1 bis 1:10 liegt.

9. Verfahren nach Anspruch 8, dadurch gekennzeichnet, daß das genannte Verhältnis im Bereich von 2:1 bis 1:3 liegt.

10. Verfahren nach einem beliebigen der vorangehenden Ansprüche, dadurch gekennzeichnet, daß der Katalysator aus einer Gruppe ausgewählt ist, die aus Bis[tri(pentafluorphenyl)phosphin] palladiumdichlorid, Bis(tricyclohexylphosphin) palladiumdichlorid und Bis(triphenylarsin)palladiumdichlorid besteht.

| No. | 1 | 2 | 3 | 4 | 5 |
|---|---|---|---|---|---|
| Catalyst concent. $10^{-4}$ M | 0.91 | 2.42 | 6.23 | 18.0 | 68.2 |
| Pressure MPa | 12.3 | 12.4 | 12.4 | 12.3 | 12.3 |
| % $O_2$ in gas | 3.4 | 3.5 | 2.6 | 2.6 | 2.6 |
| Flow Rate act 1/min | 5.3 | 5.8 | 5.8 | 5.8 | 5.8 |
| Max. Rate wt%/h | 0.91 | 1.36 | 1.38 | 1.68 | 1.43 |
| Rate/MPa $O_2$ | 2.18 | 3.19 | 4.21 | 5.22 | 4.50 |
| Rate/MPa $O_2$/$10^{-4}$ M catalyst | 2.40 | 1.29 | 0.68 | 0.29 | 0.06 |
| $H_2O_2$ concent. wt% | 3.2 | 4.7 | 3.5 | 2.5 | 2.7 |

FIG.1.

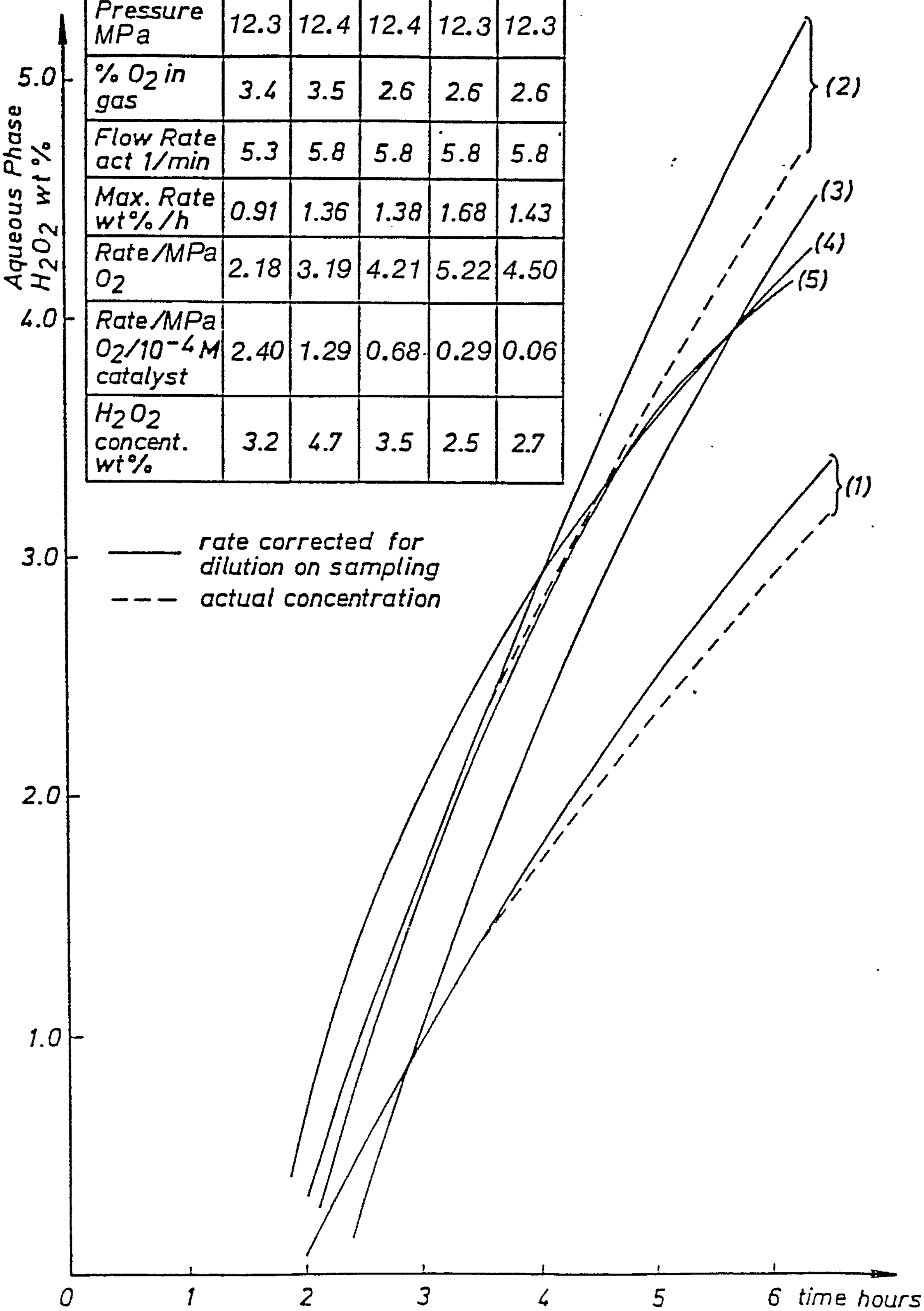

| No. | 6 | 7 | 8 | 9 | 10 |
|---|---|---|---|---|---|
| Catalyst concent. $10^{-4}$ M | 1.28 | 4.56 | 0.74 | 1.36 | 1.50 |
| Pressure MPa | 6.14 | 6.83 | 4.14 | 4.14 | 4.14 |
| % $O_2$ in gas | 3.3 | 3.5 | 3.5 | 3.5 | 3.5 |
| Flow Rate act 1/min | 5.6 | 5.4 | 5.3 | 5.2 | 5.7 |
| Max. Rate wt%/h | 0.85 | 0.78 | 0.53 | 0.55 | 0.88 |
| Rate/MPa $O_2$ | 4.06 | 3.19 | 3.63 | 3.77 | 5.95 |
| Rate/MPa $O_2$/$10^{-4}$M catalyst | 3.18 | 0.71 | 4.79 | 2.73 | 3.97 |
| $H_2O_2$ concent. wt% | 1.7 | 1.5 | 1.2 | 1.7 | 2.0 |

FIG.2.

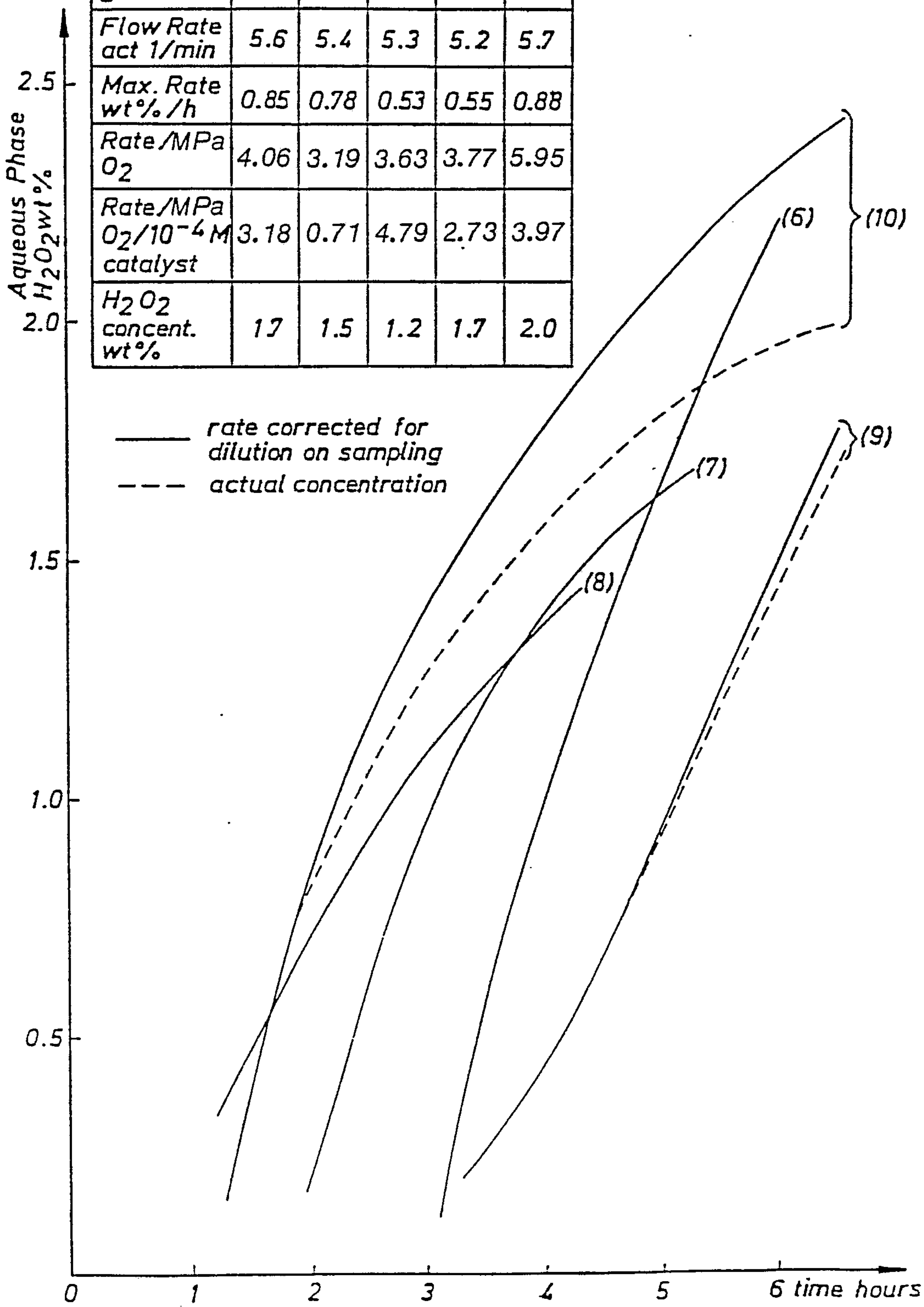

| No. | 11 | 12 | 13 | 14 |
|---|---|---|---|---|
| Catalyst concent. $10^{-4}$ M | 6.33 | 13.2 | 28.7 | 47.6 |
| Pressure MPa | 7.65 | 7.86 | 7.45 | 8.14 |
| % $O_2$ in gas | 2.5 | 2.7 | 2.6 | 3.0 |
| Flow Rate act 1/min | 11.0 | 10.0 | 10.0 | 11.0 |
| Max. Rate wt%/h | 0.21 | 0.31 | 0.44 | 0.55 |
| Rate/MPa $O_2$ | 1.02 | 1.45 | 2.03 | 2.17 |
| Rate/MPa $O_2$/$10^{-4}$ M catalyst | 0.17 | 0.10 | 0.07 | 0.04 |
| $H_2O_2$ concent. wt% | 0.8 | 1.0 | 1.5 | 1.1 |

FIG.3.

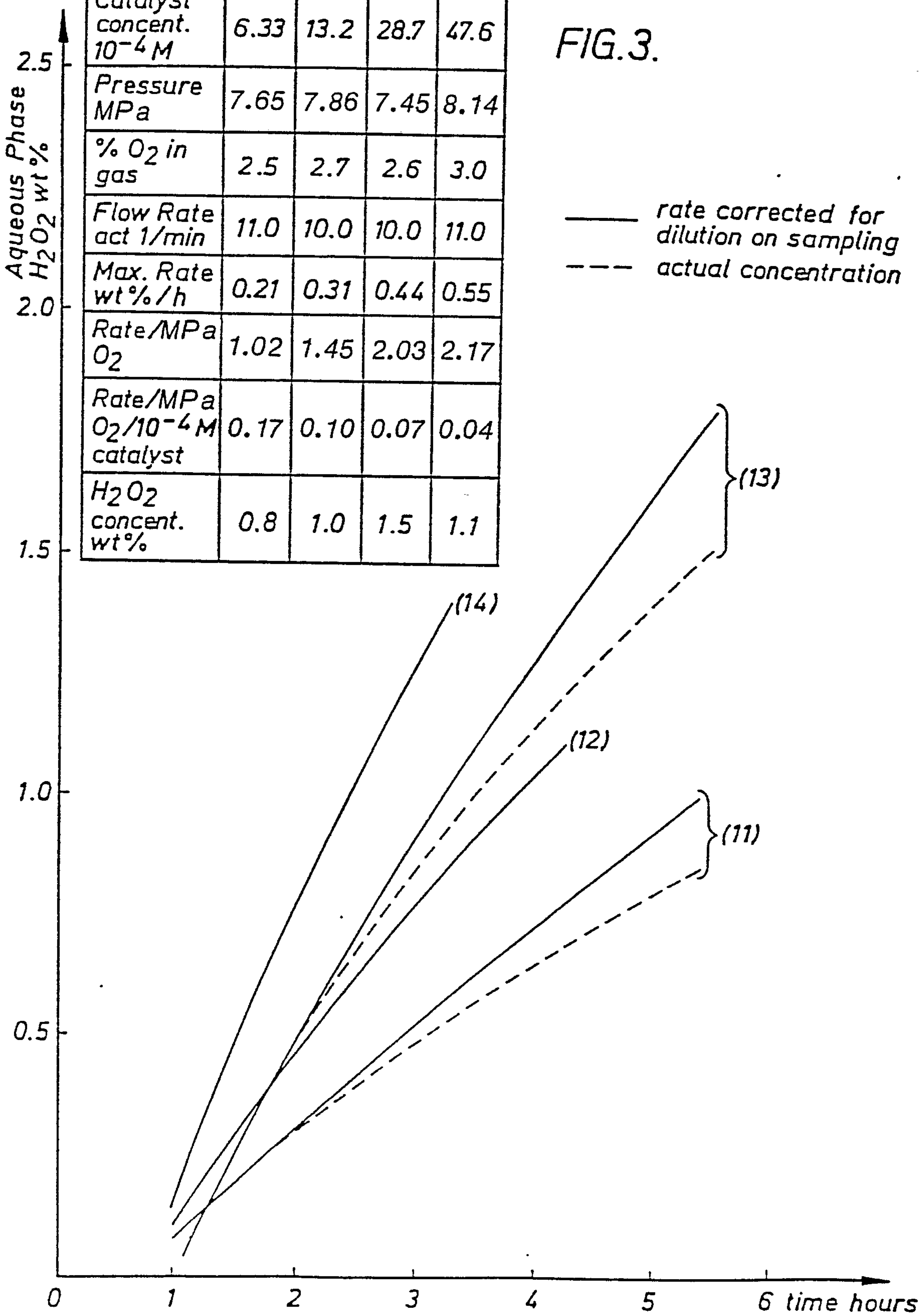

FIG. 4.

| No. | 15 | 16 | 17 | 18 | 19 |
|---|---|---|---|---|---|
| Solvent | 1,2-$C_6H_4Cl_2$ | | | $C_6H_6$ | $C_8H_{10}$ |
| Catalyst concent. $10^{-4}$ M | 19.4 | 56.1 | 89.2 | 62.9 | 63.0 |
| Pressure MPa | 12.34 | 12.41 | 12.34 | 12.48 | 12.41 |
| % $O_2$ in gas | 2.5 | 2.5 | 2.5 | 2.6 | 2.7 |
| Flow Rate act 1/min | 5.7 | 6.9 | 8.0 | 6.9 | 6.6 |
| Max. Rate wt%/h | 0.41 | 1.17 | 0.77 | 0.70 | 0.90 |
| Rate/MPa $O_2$ | 1.31 | 3.77 | 2.47 | 2.18 | 2.69 |
| Rate/MPa $O_2$/$10^{-4}$ M catalyst | 0.07 | 0.07 | 0.03 | 0.03 | 0.04 |
| $H_2O_2$ concent. wt% | 1.3 | 1.8 | 1.8 | 1.0 | 1.7 |

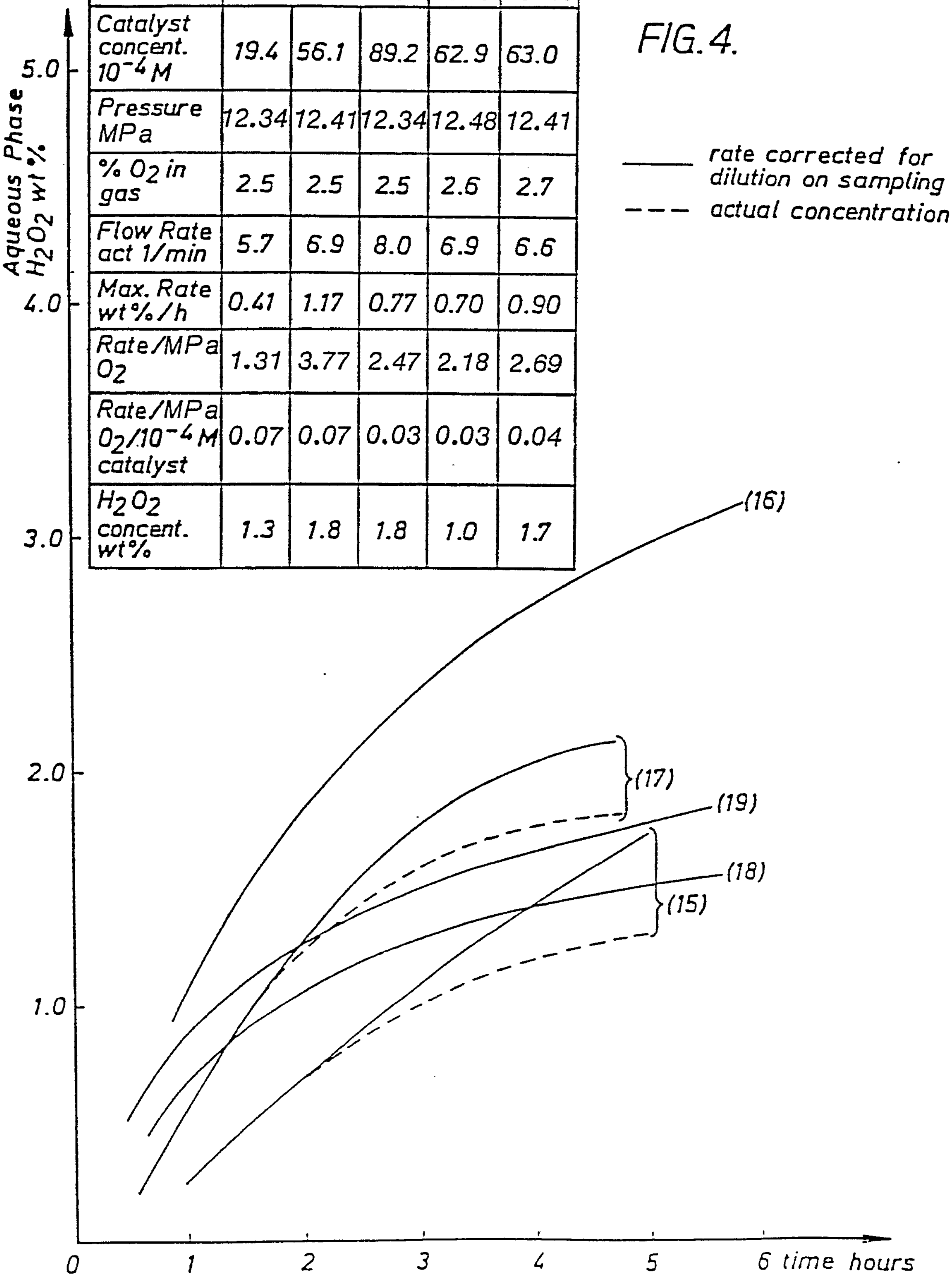

FIG.5.

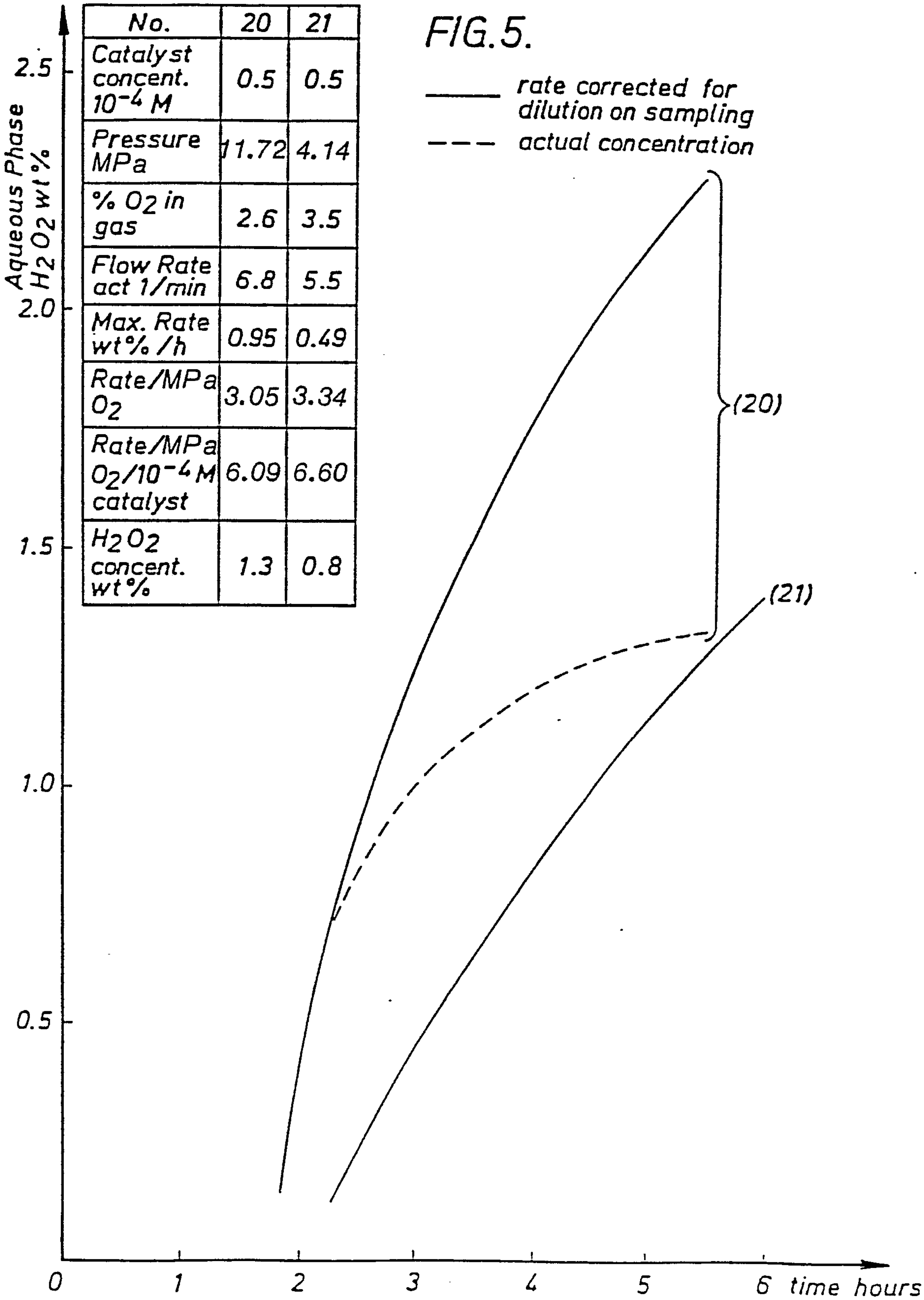


| No. | 20 | 21 |
| --- | --- | --- |
| Catalyst concent. $10^{-4}$ M | 0.5 | 0.5 |
| Pressure MPa | 11.72 | 4.14 |
| % $O_2$ in gas | 2.6 | 3.5 |
| Flow Rate act 1/min | 6.8 | 5.5 |
| Max. Rate wt% /h | 0.95 | 0.49 |
| Rate/MPa $O_2$ | 3.05 | 3.34 |
| Rate/MPa $O_2/10^{-4}$ M catalyst | 6.09 | 6.60 |
| $H_2O_2$ concent. wt% | 1.3 | 0.8 |

| No. | 22 | 23 | 24 | 25 | 26 | 27 |
|---|---|---|---|---|---|---|
| Catalyst concent. $10^{-4}$ M | 0.91 | 1.18 | 1.18 | 1.19 | 1.29 | 1.12 |
| Pressure MPa | 6.14 | 6.41 | 6.29 | 6.34 | 6.34 | 6.21 |
| % $O_2$ in gas | 3.4 | 3.4 | 3.3 | 3.4 | 3.3 | 3.3 |
| Flow Rate act 1/min | 5.4 | 5.5 | 5.5 | 5.5 | 5.5 | 5.5 |
| Max. Rate wt %/h | 0.45 | 0.56 | 0.62 | 0.58 | 0.55 | 0.23 |
| Rate/MPa $O_2$ | 2.18 | 2.47 | 2.90 | 2.61 | 2.61 | 1.02 |
| Rate/MPa $O_2/10^{-4}$ M catalyst | 2.38 | 2.12 | 2.51 | 2.20 | 2.00 | 0.97 |
| $H_2O_2$ concent. wt % | 1.8 | 2.0 | 2.0 | 1.9 | 1.9 | 0.9 |
| additive | — | 2% $C_8F_{16}$ | 0.1% $C_8F_{16}$ | 42ppm Kel-F oil | 7ppm n-eicosane | 11ppm stearic acid |

FIG.6.